(19) Europäisches Patentamt
European Patent Office
Office européen des brevets

(11) **EP 4 336 722 A1**

(12) **EUROPEAN PATENT APPLICATION**

(43) Date of publication:
**13.03.2024 Bulletin 2024/11**

(21) Application number: **22194666.8**

(22) Date of filing: **08.09.2022**

(51) International Patent Classification (IPC):
$H02M\ 7/06$ (2006.01)   $H02M\ 7/08$ (2006.01)
$H02M\ 7/10$ (2006.01)   $H02M\ 7/04$ (2006.01)
$H02M\ 3/07$ (2006.01)   $H02M\ 1/00$ (2006.01)

(52) Cooperative Patent Classification (CPC):
**H02M 3/07; H02M 1/007; H02M 7/05; H02M 7/06; H02M 7/08; H02M 7/10; H02M 7/103**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **E-Square Holding B.V.**
**1823 BP Alkmaar (NL)**

(72) Inventors:
• HSU, Yen-Wei
**Taipei City (TW)**
• MAI, Chao-Lun
**Taipei City (TW)**

(74) Representative: **Casalonga**
**Casalonga & Partners**
**Bayerstraße 71/73**
**80335 München (DE)**

(54) **AC/DC VOLTAGE MULTIPLIER**

(57)    An AC-to-DC (AC/DC) voltage multiplier of the present invention is constructed with at least one fundamental multiplier unit. Multiple fundamental multiplier units can be connected in a layered way to build up a multi-layer multiplier that multiplies the input voltage in a fast growth rate with increasing layers. Multiple multiplier units may also be connected in parallel to form multiple phase system with any arbitrary number of phases as desired. Comparing to the conventional approaches, this AC/DC voltage multiplier provides higher growth rate of voltage gain by increasing layers of multiplier units, while the current is more evenly distributed across the circuit from AC source to DC output. Furthermore, the topology is simple, which provides high design flexibility for multi-layer and multi-phase multiplier. The AC/DC voltage multipliers of the present invention are highly favorable for high-power and fast-charging applications to meet the market demand nowadays.

FIG. 1

**Description**

1. Field of the Invention

The invention relates to a voltage multiplier, in particular, to an AC/DC voltage multiplier.

2. Description of Related Art

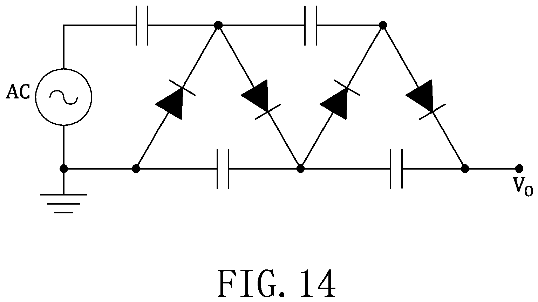

Passive rectifier voltage booster circuits with AC (Alternative Current) input are widely used in modern circuit systems. For example, as shown in Fig. 14, a Cockcroft-Walton Generator, or multiplier, generates a high DC (Direct Current) voltage converted from a lowvoltage AC or pulsing DC input. In the Cockcroft-Walton Generator families, to achieve an additional 1x multiplication of the input voltage, an additional multiplying stage is required. That is, if the input voltage needs to be multiplied by 10, 10 stages of the multiplying circuit unit are required, which results in a lengthy circuit topology. Also, for N times of voltage multiplication, the output current is dropped by 1/N, namely, the power source (e.g., transformer) needs to handle very large current to sustain the output current. In the presence of lossy components or power factor reduction, the loss is tremendous. Furthermore, in the Cockcroft-Walton Generator, the output ripple is mainly clamped by the buffering capacitors, the rectifying diode has a longer turn-on window and hence the output voltage variation is large. Small ripple may be achieved by large buffering capacitor; however, since the output current is usually so small to recover the charge of the buffering capacitor, the design is challenging.

In view of the foregoing problem, the present invention provides an AC/DC voltage multiplier, including:
a layer-1 multiplier unit, having a layer-1 high-side point, a layer-1 low-side point, a layer-1 high-side output point, and a layer-1 low-side output point, and comprising:

a layer-1 high-side diode and a layer-1 low-side diode connected in series between the layer-1 high-side point and the layer-1 low-side point, wherein a connection point of the layer-1 high-side diode and the layer-1 low-side diode is a layer-1 first input point;
a layer-1 high-side capacitor and a layer-1 low-side capacitor connected in series between the layer-1 high-side point and the layer-1 low-side point; wherein a connection point of the layer-1 high-side capacitor and the layer-1 low-side capacitor is a layer-1 second input point;
a layer-1 higher-high-side diode, connected between the layer-1 high-side point and the layer-1 high-side output point; and
a layer-1 lower-low-side diode, connected between the layer-1 low-side point and the layer-1 low-side output point.

An AC source may be inputted from the layer-1 first input point and the layer-1 second input point of the layer-1 multiplier unit. The AC source is rectified by the layer-1 high-side diode and layer-1 low-side diode in the loop of the layer-1 multiplier unit and boosted by the layer-1 high-side capacitor and the layer-1 low-side capacitor series. The layer-1 high-side capacitor and the layer-1 low-side capacitor perform auto commutation such that the voltage between the layer-1 high-side output point and the layer-1 low-side output point is boosted. The voltage between the layer-1 high-side point and the layer-1 low-side point may still include AC component. Therefore the voltage is provided to the higher-high-side diode and layer-1 lower-low-side diode for further rectifying and increasement. The layer-1 higher-high-side diode and the layer-1 lower-low-side diode perform similar but further rectifying effect to the voltage received from the layer-1 high-side point and the layer-1 low-side point. With the final filtering effect of an output capacitor connected at the output side, the layer-1 high-side output point and the layer-1 low-side output point are provided with highly pure DC voltage.

The AC/DC voltage multiplier of the present invention includes at least two levels of rectifier effect, either of the layer-1 high-side diode layer-1 low-side diode, layer-1 higher-high-side diode, or layer-1 lower-low-side diode does not need to endure the highest withstand voltage by itself, therefore the requirement for the diodes is lowered and therefore manufacture cost is lowered. Furthermore, even if one of the diodes fails, no short will form in the circuit, and therefore the AC source is protected from overload damage.

IN THE DRAWINGS

FIG. 1 is a circuit diagram of a fundamental multiplier unit of the AC/DC voltage multiplier of the present invention.
FIG.2 is a circuit diagram of the 1-layer multiplier of the present invention.
FIGs.3A and 3B are single-phase AC power sources of the present invention.
FIGs.4A and 4B are circuit operation diagram of the 1-layer multiplier of the present invention.

FIG.5A is a block diagram of the fundamental multiplier unit of the AC/DC voltage multiplier of the present invention.

FIG.5B is a block diagram of a K-layer AC/DC voltage multiplier of the present invention.

FIG.5C is a circuit diagram of a 2-layer multiplier of the present invention.

FIG.5D is a block diagram of a 2-layer multiplier of the present invention.

FIG.5E is a block diagram of a K-layer multiplier of the present invention.

FIG.5F is a circuit operational diagram of the 2-layer multiplier of the present invention.

FIG.6 is a circuit diagram of a multi-phase AC/DC imbalanced voltage multiplier of the present invention.

FIG.7A and 7B are multi-phase AC power sources of the present invention.

FIG.8 is a circuit diagram of a 3-phase AC/DC imbalanced voltage multiplier of the present invention.

FIG.9A is a circuit diagram of a multi-phase 1-layer AC/DC balanced voltage multiplier of the present invention.

FIG.9B is a multi-phase AC/DC AC power source for balanced design of the present invention.

FIG.10A is a circuit diagram of a 1-phase 1-layer AC/DC balanced voltage multiplier of the present invention.

FIG.10B is a 1-phase AC/DC AC power source for balanced design of the present invention.

FIG.11A is a circuit diagram of a 3-phase 1-layer AC/DC balanced voltage multiplier of the present invention.

FIG.11B is a 3-phase AC power source for balanced design of the present invention.

FIG.11C is a circuit diagram of a 3-phase AC/DC balanced voltage multiplier with input connection labeled of the present invention.

FIG.11D is a circuit diagram of a 3-phase AC/DC balanced voltage multiplier with another input connection labeled of the present invention.

FIG.12A is a block diagram of a multi-phase multi-layer AC/DC imbalanced voltage multiplier of the present invention.

FIG.12B to FIG.12E are phasor representations of multi-phase AC power sources for imbalanced design.

FIG.13A is a block diagram of a multi-phase multi-layer AC/DC balanced voltage multiplier of the present invention.

FIG.13B to FIG.13E are phasor representations of multi-phase AC power sources for balanced design.

FIG.14 is a circuit diagram of a conventional Cockcroft-Walton Generator.

The present invention is described as follows.

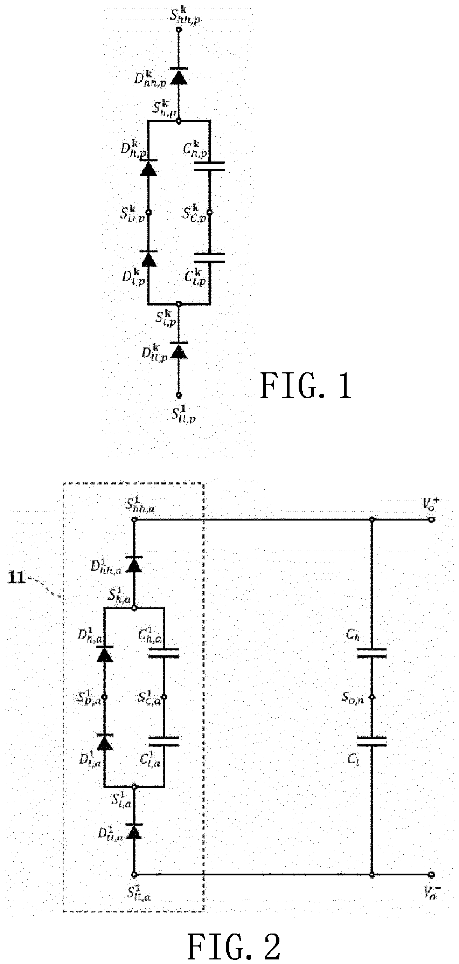

As shown in FIG.1, a fundamental layer-k multiplier unit of the AC/DC voltage multiplier has a high-side point $S_{h,p}^{k}$ , a low-side point $S_{l,p}^{k}$ , a high-side output point $S_{hh,p}^{k}$ , and a low-side output point $S_{ll,p}^{k}$ . The multiplier unit includes a high-side diode $D_{h,p}^{k}$ , a low-side diode $D_{l,p}^{k}$ , a high-side capacitor $C_{h,p}^{k}$ , a low-side capacitor $C_{l,p}^{k}$ , a higher-high-side diode $D_{hh,p}^{k}$ , and a lower-low-side diode $D_{ll,p}^{k}$ , The high-side diode $D_{h,p}^{k}$ and the low-side diode $D_{l,p}^{k}$ are connected in series between the high-side point $S_{h,p}^{k}$ and the low-side point $S_{l,p}^{k}$ . The high-side capacitor $C_{h,p}^{k}$ and the low-side capacitor $C_{l,p}^{k}$ are connected in series between the high-side point $S_{h,p}^{k}$ and the low-side point $S_{l,p}^{k}$ . The higher-high-side diode $D_{hh,p}^{k}$ is connected between the high-side point $S_{h,p}^{k}$ and the high-side output point $S_{hh,p}^{k}$ , and the lower-low-side diode $D_{ll,p}^{k}$ is connected between the low-side point $S_{l,p}^{k}$ and the low-side output point $S_{ll,p}^{k}$ . A connection point of the high-side diode $D_{h,p}^{k}$ and the low-side diode $D_{l,p}^{k}$ is a first input point $S_{D,p}^{k}$ . A connection point of the high-side capacitor $C_{h,p}^{k}$ and the low-side capacitor $C_{l,p}^{k}$ is a second input point $S_{C,p}^{k}$ .

To help with the understanding of the present invention, the subscript "D" in $S_{D,p}^{k}$ denotes the diode side, while the subscript "C" in $S_{C,p}^{k}$ denotes the capacitor side, and the subscript "p" denotes the phase group f the AC source that the multiplier receive power from. The two signal points $S_{D,p}^{k}$ and $S_{C,p}^{k}$ , together can separate the circuit into a high-side segment, denoted by "h" in the subscripts of the components and signal symbols, and a low-side counterpart, denoted by "l". The "hh" and the "ll" in the subscripts denote the even higher-high-side and the even lower-low-side of the circuit, respectively. The superscript "k" in each symbol denotes the layer numbering of the multiplier unit

**EP 4 336 722 A1**

With reference to FIG.2, for a basic multiplier of the present invention, the AC/DC voltage multiplier is a 1-layer multiplier with a layer-1 multiplier unit 11, which also means it is a 1-layer multiplier that receives single-phase power source. The components of the layer-1 multiplier unit 11 may be named by adding "layer-1" in front of the components of diodes, capacitors and signal points, and replacing "k" with the superscript "1" in each symbol. The subscript "$p$" is also replaced with "a" to denote single-phase input. For example, the "high-side point $S_{h,p}^{k}$" in the layer-1 multiplier unit 11 is "layer-1 high-side point $S_{h,a}^{1}$", and the "low-side diode $D_{l,p}^{k}$" in the layer-1 multiplier unit 11 is "layer-1 low-side diode $D_{l,a}^{1}$".

At the output side of the AC/DC voltage multiplier as shown in FIG.2, preferably, a first capacitor $C_h$ and a second capacitor $C_l$ are connected in series between the layer-1 high-side output point $S_{hh,a}^{1}$ and the layer-1 low-side output point $S_{ll,a}^{1}$ for filtering ripples, and act as buffering and balancing capacitors for the output signal. Notice that one may keep on adding additional buffering capacitors in between the output points that are not shown in the figure. In the layer-1 multiplier unit 11, the layer-1 high-side output point $S_{hh,a}^{1}$ and the layer-1 low-side output point $S_{ll,a}^{1}$ are the output of interest, namely, output terminals $V_o^{+}$ and $V_o^{-}$.

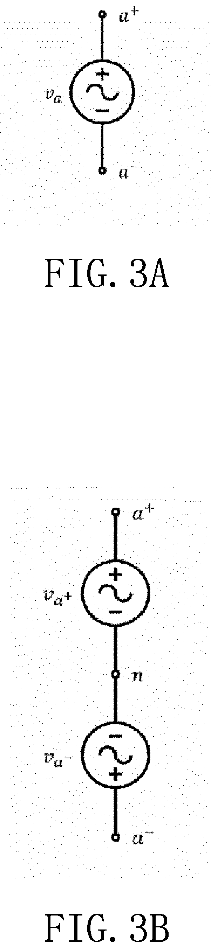

With reference to FIG.3A, in an embodiment, a single-phase AC power source $v_a$ to be connected to the layer-1 first input point $S_{D,p}^{1}$ and the layer-1 second input point $S_{C,p}^{1}$ has a first terminal $a^{+}$ and a second terminal $a^{-}$. The layer-1 first input point $S_{D,a}^{1}$ and the layer-1 second input point $S_{C,a}^{1}$ are connected to the terminals $a^{+}$ and $a^{-}$. The voltage of $v_a$ may be presented as:

$$v_a(t) = \sqrt{2}V_\phi \cos(\omega t)$$

wherein $V_\phi$ is the root-mean-square (RMS) of the phase voltage of the single-phase AC power source, $\omega = 2\pi f$ where $f$ is the frequency of the AC voltage signal, and t is the time variable.

With reference to FIG.3B, an alternative embodiment for the AC power source includes a first AC source $v_{a+}$ and a second AC source $v_a$-. The first AC source $v_{a+}$ and the second AC source $v_a$- are connected in series between the first terminal $a^{+}$ and the second terminal $a^{-}$, and the phase of the second AC source $v_a$-is shifted 180°with respect to the first AC source $v_{a+}$. The connection point of the first AC source $v_{a+}$ and the second AC source $v_a$- is a neutral point n. The voltage of the single-phase AC power source may be presented as:

$$v_{a+}(t) = \sqrt{2}V_\phi \cos(\omega t)$$

$$v_a-(t) = \sqrt{2}V_\phi \cos(\omega t - 180°)$$

With the single-phase AC power source as shown in FIG.3B, a user may choose to connect the layer-1 first input point $S_{D,p}^{1}$ and the layer-1 second input point $S_{C,p}^{1}$ to either two of the first terminal $a^{+}$, the second terminal $a^{-}$, such that the layer-1 multiplier unit receives ($v_a$- - $v_a$+) or ($v_a$+ - $v_a$-) as input power.

With reference to FIG.2, the single-phase AC power source depicted in FIG.3B can be utilized, where points $a^{+}$ and $a^{-}$ are connected to layer-1 first input point $S_{D,a}^{1}$ and layer-1 second input point $S_{C,a}^{1}$, respectively. The layer-1 high-side output point $S_{hh,a}^{1}$ and layer-1 low-side output point $S_{ll,a}^{1}$ are immediately the output of interest, namely, $V_o^{+}$ and $V_o^{-}$, respectively, where $V_o^{-}$ can be connected to the electrical DC ground GND. The signal point $S_{o,n}$ in most cases, acts as the balancing or neutral point of the two capacitors $C_h$ and $C_l$ and is hence connected to the neutral point n of the single-phase power source depicted in FIF.3B.

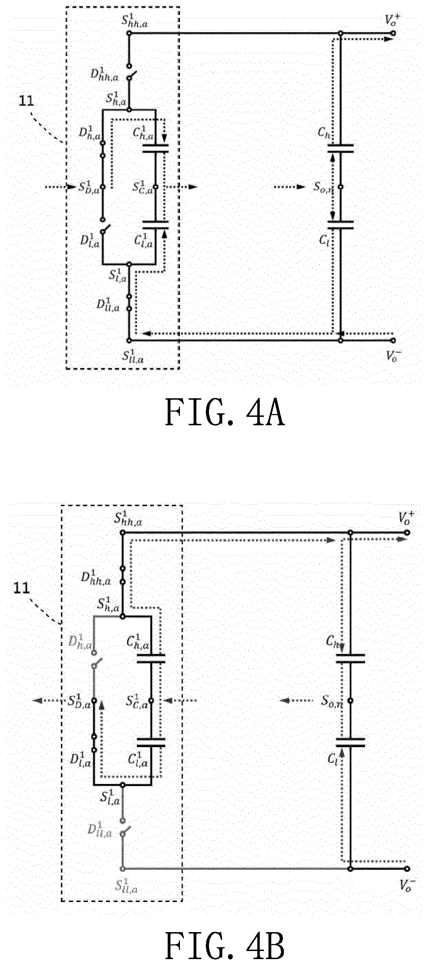

With reference to FIG.4A, the dotted line with arrow denotes the direction of current. Deducted by the Kirchhoff's current law (KCL) and Kirchhoff's voltage law (KVL), during $v_a+(t) > 0$ and $v_a-(t) < 0$, within a period of time around $v_a+(t)$ reaches its maximum and $v_a-(t)$ reaches its minimum, capacitors $C_{h,a}^1$ and $C_{l,a}^1$ are charged through diodes $D_{h,a}^1$ and $D_{ll,a}^1$, respectively.

With reference to FIG.4B, during $v_a+(t) < 0$ and $v_a-(t) > 0$, within a period of time around $v_a+(t)$ reaches its minimum and $v_a-(t)$ reaches its maximum, capacitors $C_{h,a}^1$ and $C_{l,a}^1$ are discharged through diodes $D_{hh,a}^1$ and $D_{l,a}^1$.

During the on-time of the layer-1 higher-high-side diode $D_{hh,a}^1$, the DC output voltage $V_o^+$ can be calculated as:

$$V_o^+ = V_{S_{h,a}^1} - V_F = (\frac{1}{2}V_o^+ + \sqrt{2}V_\phi + V_{C,st,avg}) - V_F = \frac{1}{2}V_o^+ + \sqrt{2}V_\phi + 2\sqrt{2}V_\phi - 2V_F$$

In the above equation, $V_{C,st,avg}$ is the maximum voltage capacitor $C_{h,a}^1$ or $C_{l,a}^1$ can build up at the AC steady state, and $V_F$ is an average forward voltage of the layer-1 higher-high side diode $D_{hh,p}^1$, layer-1 high-side diode $D_{h,p}^1$, the layer-1 low-side diode $D_{l,p}^1$, and layer-1 lower-low side diode $D_{ll,p}^1$. In a specific condition, $V_F$ is the forward voltage of the layer-1 high-side diode $D_{h,p}^1$, the layer-1 low-side diode $D_{l,p}^1$, the layer-1 high-high-side diode $D_{hh,p}^1$, and the layer-1 low-low-side diode $D_{ll,p}^1$ when the layer-1 high-side diode $D_{h,p}^1$, the layer-1 low-side diode $D_{l,p}^1$, the layer-1 high-high-side diode $D_{hh,p}^1$, and the layer-1 low-low-side diode $D_{ll,p}^1$ are the same type of diode. The definition of $V_F$ will be appropriate in the rest of the description herein except stated otherwise. Notice that $V_F$ is normally small, and around mm-volt to a few single-digit volts, which becomes negligible when $V_\phi$ is high, e.g. 110V, 230V, or higher.

As a result, by rearranging $V_o^+$ in the equation gives:

$$V_o^+ = 2(3\sqrt{2}V_\phi - 2V_F)$$

Further, the practical output power between the layer-1 high-side point $S_{h,p}^1$ and the layer-1 high-side output point $S_{hh,p}^1$, namely, the output voltage across the first capacitor $C_h$ and the second capacitor $C_l$ series is in the range of:

$$V_o^+ = V_{DC} = 2(3\sqrt{2}V_\phi - 2V_F) \pm \delta\%$$

Note that in the above equation, $\delta\%$ is a tolerance value (e.g., due to loss or parasitic effects in all the circuit components), and preferably to be 10%. The definition of $\delta\%$ will be appropriate in the rest of the description herein.

In the preferred embodiment, when the values of the first capacitor $C_h$ and the second capacitor $C_l$ are the same, the connection point between the first capacitor $C_h$ and the second capacitor $C_l$ is a neutral connection point $S_{o,n}$, and either the layer-1 high-side output point $S_{hh,p}^1$ or the layer-1 low-side output point $S_{ll,p}^1$ is a ground GND, an output voltage across the first capacitor $C_h$ or an output voltage across the second capacitor $C_l$ is $V_{DC}/2$.

At the output side, the user may choose either two of the neutral connection point $S_{o,n}$, the layer-1 high-side output point $S_{hh,p}^1$ ( $V_o^+$ ), and the layer-1 low-side output point $S_{ll,p}^1$ ( $V_o^-$ ) to be connected to the load, and the other to be connected to the ground GND. For example, if the layer-1 low-side output point $S_{ll,p}^1$ is the ground GND, the DC voltage at the neutral connection point $S_{o,n}$ is $V_{DC}/2$, and the DC voltage at the layer-1 high-side output point $S_{hh,p}^1$ is $V_{DC}$; if the layer-1 high-side output point $S_{hh,p}^1$ is connected to the ground GND, the DC voltage at the neutral connection point $S_{o,n}$ is $-V_{DC}/2$, and the DC voltage at the layer-1 low-side output point $S_{ll,p}^1$ is $-V_{DC}$; if the neutral connection point $S_{o,n}$ is connected to ground GND, the DC voltage at the layer-1 high-side output point $S_{hh,p}^1$ is $V_{DC}/2$, and the DC voltage at the layer-1 low-side output point $S_{ll,p}^1$ is $-V_{DC}/2$.

The different output connection choices in the 1-layer multiplier may also be implemented in the following embodiments of multi-layer/phase AC/DC multipliers. It can be noticed that, when the ground GND is connected to both the neutral point n of the source side and the signal point $S_{o,n}^1$, one may create both positive and negative DC output voltages simultaneously.

FIG.1 is a fundamental multiplier unit of the present invention, and the operation of the fundamental unit is illustrated above. From then on, multiple-layer multipliers, multiple-phase multipliers, and multiple-phase multiple-layer multipliers may be built up. Let's start with multiple-layer multiplier, that is, a K-layer multiplier.

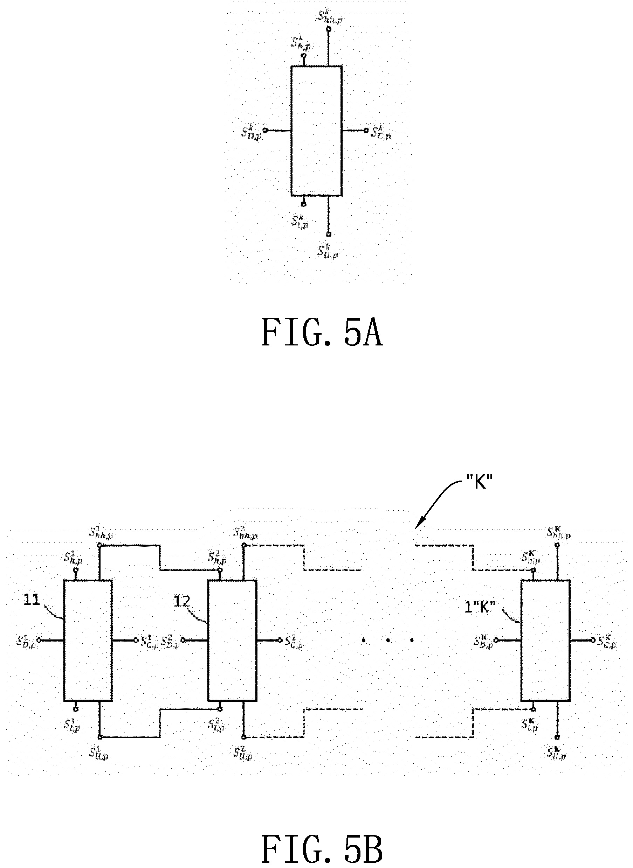

With reference to FIG.5A, in a simplified block diagram of the fundamental multiplier unit 1k of FIG.1, only the points of first input point $S_{D,p}^k$ , second input point $S_{C,p}^k$ , low-side output point $S_{ll,p}^k$ , high-side output point $S_{hh,p}^k$ , high-side point $S_{h,p}^k$ , and the low-side point $S_{l,p}^k$ are labeled. The block diagram will be used later in the description of the multi-layer or multi-phase multiplier unit

With reference to FIG.5B, in a second embodiment of the present embodiment, the multiplier is a K-layer multiplier, including the layer-1 multiplier unit 11 to a layer-K multiplier unit 1"K", wherein "K" is an integer larger than 1.

The connection between layers of multiplier units is as follows: in each layer-k multiplier unit for k=2 to k=K, the layer-k high-side point $S_{h,p}^k$ of the layer-k multiplier unit is connected to the layer-(k-1) high-side output point $S_{hh,p}^{k-1}$ of the layer-(k-1) multiplier unit, and the layer-k low-side point $S_{l,p}^k$ of the layer-k multiplier unit is connected to the layer-(k-1) low-side output point $S_{ll,p}^k$ of the layer-(k-1) multiplier unit.

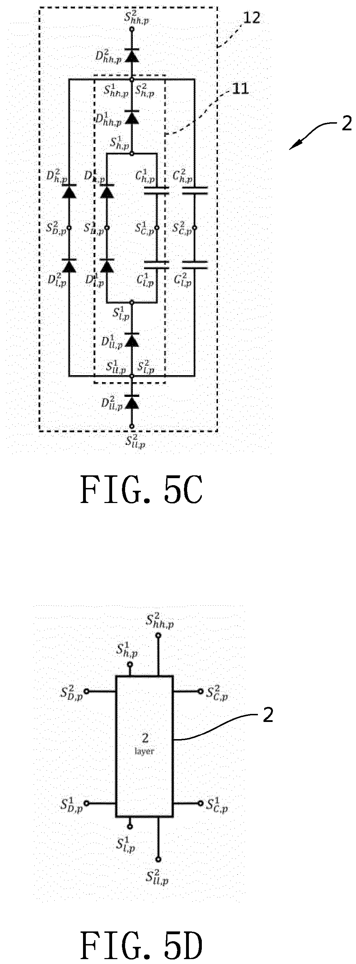

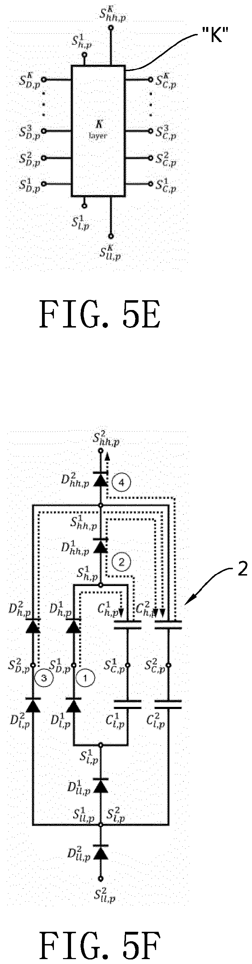

As an example, a detailed circuit diagram of a 2-layer multiplier 2 is shown in FIG.5C, and a simplified block diagram of the 2-layer multiplier 2 is shown in FIG.5D. A simplified block diagram of the K-layer multiplier "K" unit is shown in FIG 5E. A K-layer multiplier "K" itself may be deemed as a K-layer 1-phase voltage multiplier, and may also be used as a "multiplier unit", while connecting multiple multiplier units in parallel between $V_o^+$ and $V_o^-$ will create a voltage multiplier of multiple phases. K-layer N-phase voltage multiplier will be further illustrated in the following discussion.

Preferably, in each layer-k multiplier unit for k=1 to K, the phase of layer-k first input point $S_{D,p}^k$ and that of layer-k second input point $S_{C,p}^k$ should be different, and the phase of layer-k second input point $S_{C,p}^k$ and that of layer-(k-1) second input point $S_{C,p}^k$ should be also different. Therefore, in the present embodiment, when the layer-k first input point $S_{D,p}^k$ is connected to one of the terminals of the single-phase AC power source either $v_a+$ or $v_a-$, and

the layer-k second input point $S_{C,p}^{k}$ is connected to the other terminal of the single-phase AC power source that has a phase difference with respect to the terminal that the layer-k first input point $S_{D,p}^{k}$ is connected to. That is, if layer-k first input point $S_{D,p}^{k}$ is connected to $v_a+$, then layer-k second input point $S_{C,p}^{k}$ will need to connect to $v_a-$, and layer-(k-1) second input point $S_{C,p}^{k-1}$ will need to connect to $v_{a+}$. When layer-k first input point $S_{D,p}^{k}$ is connected to $v_a-$, then layer-k second input point $S_{C,p}^{k}$ will need to connect to $v_a+$, and layer-(k-1) second input point $S_{C,p}^{k-1}$ will need to connect to $v_a-$. Preferably, at least one snubber circuit unit may be connected in parallel with at least one of the layer-k high-side diode $D_{h,p}^{k}$ , the layer-k low-side diode $D_{l,p}^{k}$ , the layer-k higher-high-side diode $D_{hh,p}^{k}$ , and the layer-k lower-low-side diode $D_{ll,p}^{k}$ for k=1, 2 ...K. That is, any one of the diodes in the voltage multiplier of the present invention may be paralleled with a snubber circuit unit by design. Such snubber circuit unit protects the diodes from peak voltages when the diodes turn off. The snubber circuit units may be RC snubber units.

With reference to FIG.5F, for a 2-layered multiplier 2 as shown in FIG.5C, the same operation mechanism as in the layer-1 multiplier unit 11 repeats itself in the layer-2 multiplier unit 12. In layer-1 multiplier unit 11, the capacitor $C_{h,p}^{1}$ will first be charged from diode $D_{h,p}^{1}$ (current flow 1), and then will be discharged through diode $D_{hh,p}^{1}$ (current flow 2). In layer 2, the capacitor $C_{h,p}^{2}$ will also go through a charged phase through diode $D_{h,p}^{2}$ (current flow 3) and diode $D_{hh,p}^{1}$ (current flow 2), and will be discharged through diode $D_{hh,p}^{2}$ (current flow 4). Notice that, eventually the current flow 3 will become zero when the voltage at $S_{hh,p}^{1}$ is too high that diode $D_{h,p}^{2}$ will stop turning on.

At the AC steady state, the voltage of the layer-1 high-side capacitor $C_{h,p}^{1}$ will reach a nominal maximum and that of the layer-2 high-side capacitor $C_{h,p}^{2}$ will reach a nominal maximum of $V_{C2,st,avg}$. Notice that, this voltage $V_{C2,st,avg}$ now is the voltage difference between layer-1 high-side output point $S_{hh,p}^{1}$ and layer-1second input point $S_{C,p}^{1}$ , which is the line voltage between layer-1 second input point $S_{C,p}^{1}$ and layer-2 second input point $S_{C,p}^{2}$ plus $V_{C1,st,avg}$ and minus the forward voltage of $D_{hh,p}^{1}$ . Accordingly, the output voltage at $S_{hh,p}^{2}$ can be derived as:

$$V_o^+ = 2\left[\left(1 + F_{N,\ell=1} + F_{N,\ell=2}\right)\sqrt{2}V_\phi - 3V_F\right]$$

In the above equation, $F_{N,\ell=1}*\sqrt{2}V_\phi$ is the line voltage between $S_{D,p}^{1}$ and $S_{C,p}^{1}$ , and $F_{N,\ell=2}*\sqrt{2}V_\phi$ is the line voltage between $S_{C,p}^{1}$ and $S_{C,p}^{2}$ , and $V_F$ is an average forward voltage of the layer-2 higher-high side diode $D_{hh,p}^{2}$ layer-1 higher-high side diode $D_{hh,p}^{1}$ , layer-1 high-side diode $D_{h,p}^{1}$ , the layer-1 low-side diode $D_{l,p}^{1}$ , and layer-1 lower-low side diode $D_{ll,p}^{1}$ , layer-2 lower-low side diode $D_{ll,p}^{2}$ .

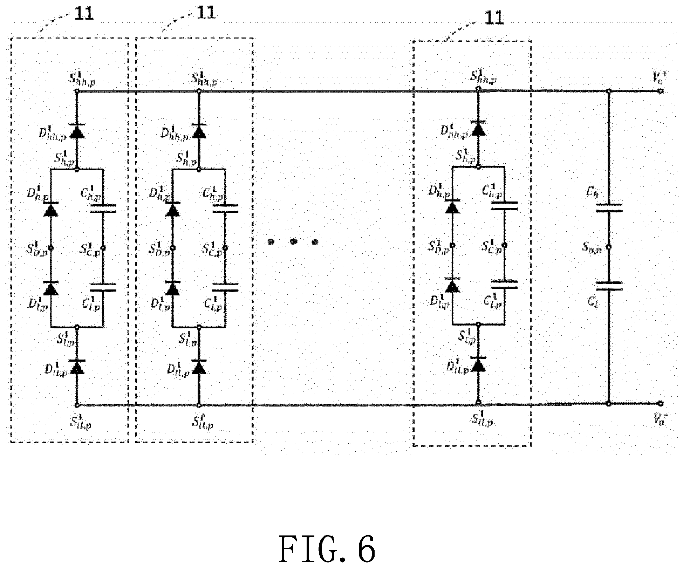

With reference to FIG.6, in a second embodiment of the present invention, the AC/DC voltage multiplier is a multi-phase multiplier. In particular, it is an N-phase 1-layer multiplier with imbalanced design. The AC/DC voltage multiplier includes N layer-1 multiplier units 11; wherein "N" is an integer larger than 1. The layer-1 high-side output points $S^1_{hh,p}$ of the layer-1 multiplier units 11 are connected to each other, and the layer-1 low-side output points $S^1_{ll,p}$ of the layer-1 multiplier units 11 are connected to each other; wherein the layer-1 first input points $S^1_{D,p}$ and the layer-1 second input points $S^1_{C,p}$ are connected to an N-phase AC power source, and a phase between the layer-1 first input point $S^1_{D,p}$ and the layer-1 second input point $S^1_{C,p}$ of each layer-1 multiplier units 11 is different. Preferably, the phase difference between the layer-1 first input point $S^1_{D,p}$ and the layer-1 second input point $S^1_{C,p}$ of the layer-1 multiplier units 11 should be the same.

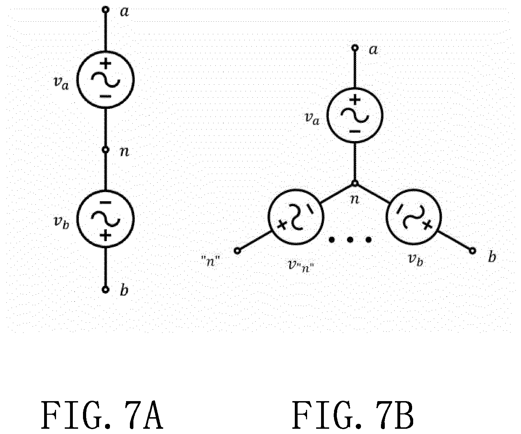

With reference to FIG.7A and FIG.7B, an N-phase AC power source for the imbalanced design may include N single phase power sources $v_a$, $v_b$, $v_c$, ...$v_{"n"}$, having terminals a, b, ... "n", and a common neutral point n where "n" is the N$^{th}$ alphabet to represent the N$^{th}$ terminal of the N-phase AC power source. The single-phase power sources $v_a$, $v_b$, $v_c$, ... $v_{"n"}$ can be from the output of a generator, from either the primary or secondary side of a transformer, or any available power circuits. Preferably, the N single-phase power sources $v_a$, $v_b$, $v_c$, ... $v_{"n"}$ have a phase difference of 360°/N between each other.

As shown in FIG.7A, for a 2-phase source, the time domain phase voltage of the power source $v_a$, $v_b$ is:

$$v_a(t) = \sqrt{2}V_\phi \cos(\omega t)$$

$$v_b(t) = \sqrt{2}V_\phi \cos(\omega t - 90°)$$

As shown in FIG.7B, for a 3-phase source, the time domain phase voltage of the power source $v_a$, $v_b$, $v_c$ is:

$$v_a(t) = \sqrt{2}V_\phi \cos(\omega t)$$

$$v_b(t) = \sqrt{2}V_\phi \cos(\omega t - 120°)$$

$$v_c(t) = \sqrt{2}V_\phi \cos(\omega t + 120°)$$

In the above equations, $V_\phi$ is the root-mean-square (RMS) phase amplitude, and $\omega = 2\pi f$ where $f$ is the frequency of the AC voltage signal. Preferably, the frequency may be 50-60Hz, or any frequency range that covers the frequencies of regular supply mains.

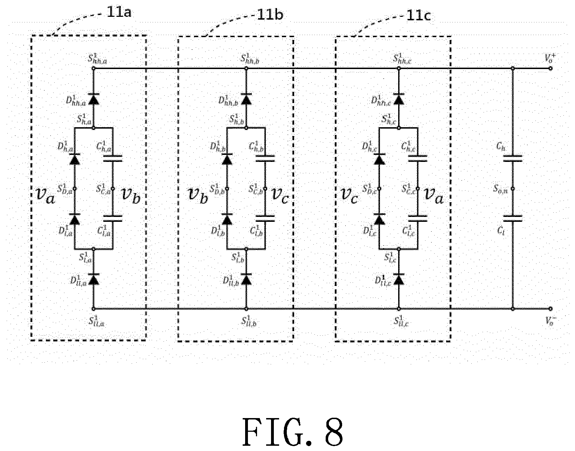

With reference to FIG.8, a 3-phase 1-layer imbalanced multiplier includes 3 layer-1 multiplier units 11a, 11b, 11c that are connected in parallel. Layer-1 multiplier unit 11a includes layer-1 high-side point $S^1_{h,a}$, a layer-1 low-side point $S^1_{l,a}$, a layer-1 high-side output point $S^1_{hh,a}$, a layer-1 low-side output point $S^1_{ll,a}$, a layer-1 high-side diode $D^1_{h,a}$, a layer-1 low-side diode $D^1_{l,a}$, a layer-1 high-side capacitor $C^1_{h,a}$, a layer-1 low-side capacitor $C^1_{l,a}$, a layer-1 higher-high-side diode $D^1_{hh,a}$, and a layer-1 lower-low-side diode $D^1_{ll,a}$. A connection point of the layer-1 high-side diode $D^1_{h,a}$ and the layer-1 low-side diode $D^1_{l,a}$ is a layer-1 first input point $S^1_{D,a}$. A connection point of the layer-1 high-side capacitor $C^1_{h,a}$ and the layer-1 low-side capacitor $C^1_{l,a}$ is a layer-1 second input point $S^1_{C,a}$. The labels of the 1-layer multiplier 11b, 11c may be defined with the same rule, wherein the subscripts "a", "b", and "c" represent components of different layer-1 multiplier units 11a, 11b, 11c with different input phases.

An exemplary input connection of the 3-phase 1-layer imbalanced multiplier is also denoted in FIG.8, wherein the layer-1 first input point $S^1_{D,a}$ is connected to power source $v_a$, the layer-1 second input point $S^1_{C,a}$ is connected to power source $v_b$, the layer-1 first input point $S^1_{D,b}$ is connected to power source $v_b$, the layer-1 second input point $S^1_{C,b}$ is connected to power source $v_c$, the layer-1 first input point $S^1_{D,c}$ is connected to power source $v_c$, and the layer-1 second input point $S^1_{C,c}$ is connected to power source $v_c$.

Notice that for each of the fundamental layer-1 multiplier units 11a, 11b, 11c, the phases of the input signals at layer-1 first input point $S^1_{D,p}$ and layer-1 second input point $S^1_{C,p}$ should be different. In this embodiment, the phase between the layer-1 first input point $S^1_{D,a}$ and the layer-1 second input point $S^1_{C,a}$ is 360°/3 = 120°. The 3-phase 1-layer imbalanced multiplier further includes the first capacitor $C_h$ and the second capacitor $C_l$, connected in series between the layer-1 high-side output points $S^1_{hh,p}$ and the layer-1 low-side output points $S^1_{ll,p}$ .

The DC voltage output $V^+_o$ can be obtained with the same manner of KCL and KVL when obtaining that in a single-phase system as in FIG.2. Due to the phase difference at the layer-1 first input point $S^1_{D,p}$ and layer-1 second input point is now 120°, the maximum voltage difference between $S^1_{D,a}$ and $S^1_{C,a}$ will be lower than the case of a single-phase system where the phase difference is 180°. An output voltage across the first capacitor $C_h$ and the second capacitor $C_l$ is in the range of:

$$V^+_o = 2\left[\left(1 + F_{3,l=1}\right)\sqrt{2}V_\phi - 2V_F\right] \pm \delta\%$$

In the above equation, $V_\phi$ is the root mean square phase voltage of the N-phase AC power source, $F_{3,l=1} * \sqrt{2}V_\phi$ is the line voltage that each layer-1 first input point $S^1_{D,p}$ and the layer-1 second input point $S^1_{C,p}$ of the layer-1 multiplier units 11 receive. In this case, the output voltage of the 3-phase 1-layer imbalanced multiplier is $V^+_o = 2\left[\left(1 + \sqrt{3}\right)\sqrt{2}V_\phi - 2V_F\right] \pm \delta\%$ .

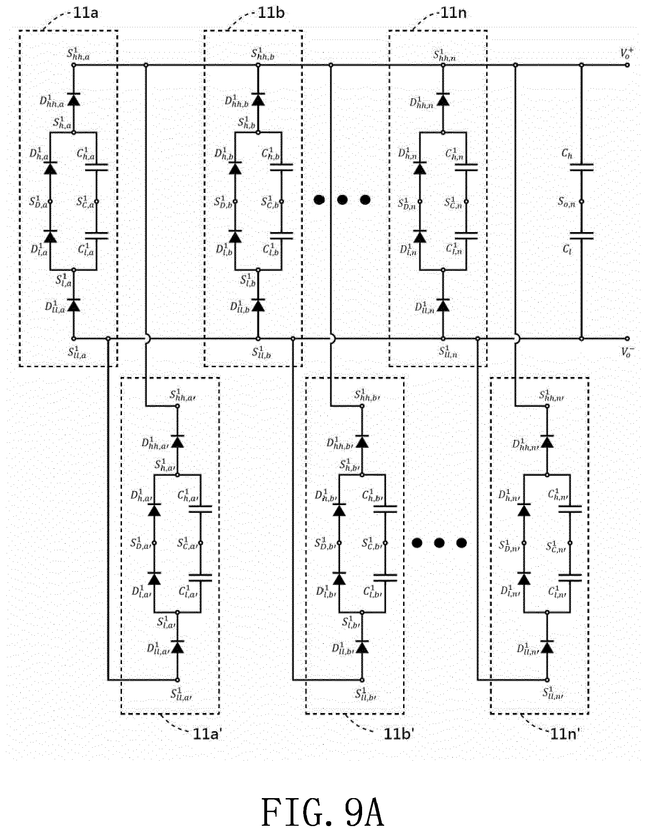

With reference to FIG.9A, in a third embodiment of the present invention, the AC/DC voltage multiplier is a multi-phase multiplier. In particular, it is an N-phase 1-layer multiplier with balanced design. The balanced N-phase 1-layer multiplier includes 2*N layer-1 multiplier units 11a, 11b,... 11n, and 11a', 11b',... 11n'; wherein "N" is an integer larger than 0. The layer-1 high-side output points $S^1_{hh,p}$ of the layer-1 multiplier units 11a, 11b,... 11n, and 11a', 11b',... 11n' are connected to each other as the output terminal $V_o{}^+$, and the layer-1 low-side output points $S^1_{ll,p}$ of the layer-1 multiplier units11a, 11b,... 11n and 11a', 11b',... 11n' are connected to each other as the output terminal $V_o{}^-$.

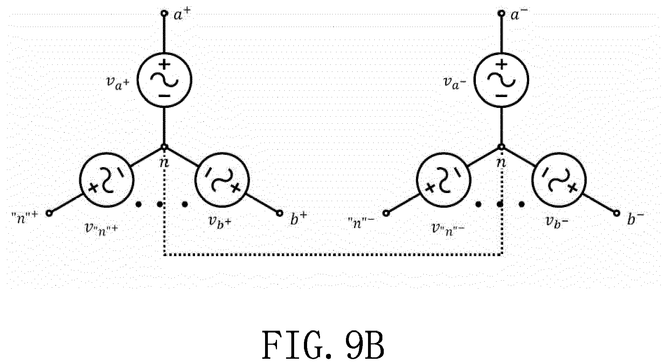

With reference to FIG.9B, the balanced N-phase multiplier has an input of an N-phase AC power source. An N-phase AC power source for the balanced design may include 2*N single phase power sources $v_a+$, $v_b+$, ... $v_{"n"}+$, and $v_a-$, $v_b-$, ... $v_{"n"}-$ , and having N pairs of first terminal $a+$, $b+$, ... $"n"+$ and second terminal $a-$, $b-$, ... $"n"-$ , and a common neutral point $n$. The power sources $v_a+$, $v_b+$, ... $v_{"n"}+$ are connected between the first terminal $a+$, $b+$, ... $"n"+$ and the common neutral point n, and the power sources $v_a-$, $v_b-$, ... $v_{"n"}-$ are connected between the second terminal $a-$, $b-$, ... $"n"-$ and the common neutral point $n$. Each power source $v_a-$, $v_b-$, ... $v_{"n"}-$is shifted by 180° with respect to the power source $v_a+$, $v_b+$, ... $v_{"n"}+$, therefore, the voltage at each second terminal $a-$, $b-$, ... $"n"-$ is shifted by 180° with respect to the voltage at the first terminal $a+$, $b+$, ... $"n"+$of the same pair, and the voltages at the first terminals $a+$, $b+$, ... $"n"+$ are shifted by 360° /N between each other.

In the present embodiment, the layer-1 first input points $S_{D,p}^{1}$ and the layer-1 second input points $S_{C,p}^{1}$ of N of the layer-1 multiplier units 11a, 11b,... 11n are connected to each of the first terminals $a^+$, $b^+$, ... "$n$"$^+$ and second terminals $a^-$, $b^-$, ... "$n$"$^-$ of the N-phase AC power source, and the layer-1 first input point $S_{D,p}^{1}$, and the layer-1 second input point $S_{C,p}^{1}$, of the other N of the layer-1 multiplier units 11a', 11b',... 11n' are connected to the respective second terminals $a^-$, $b^-$, ... "$n$"$^-$and the respective first terminals $a^+$, $b^+$, ... "$n$"$^+$of the same pair, such that the layer-1 first input points $S_{D,p}^{1}$ of the N of the layer-1 multiplier units 11a, 11b,... 11n have a 180° phase difference to that of the layer-1 first input points $S_{D,p}^{1}$, of the other N of the layer-1 multiplier units 11a', 1 1b',... 11n', and that the layer-1 second input points $S_{C,p}^{1}$ of the N of the layer-1 multiplier units 11a, 11b,...11n have a 180° phase difference to that of the layer-1 second input points $S_{C,p}^{1}$, of the other N of the layer-1 multiplier units 11a', 11b',.... 11n'.

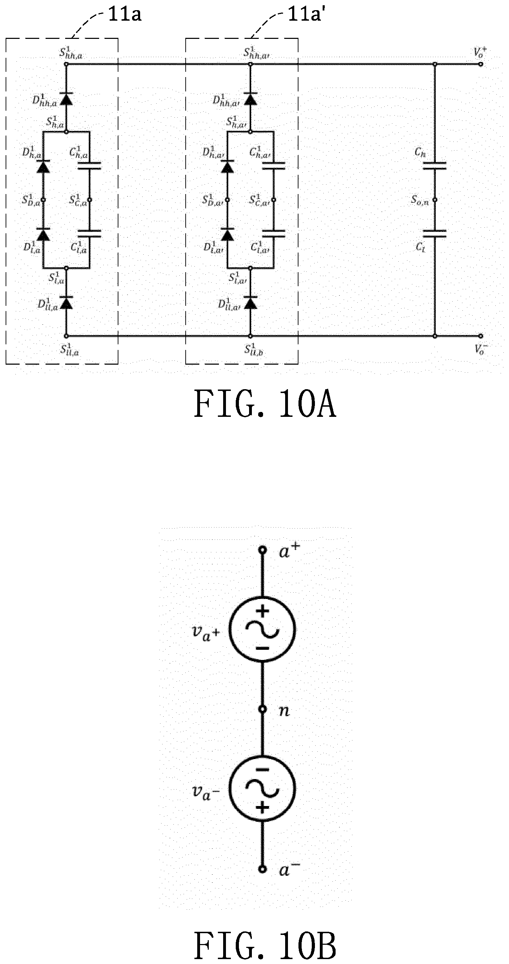

With reference to FIG. 10A and FIG. 10B, back to the 1-phase 1-layer multiplier, as an example, a balanced N-phase multiplier with N=1 has two 1-layer multiplier units 11a and 11a'connected in parallel between output terminals $Vo^+$ and $Vo^-$, and further includes the first capacitor $C_h$ and the second capacitor $C_l$, connected in series between the layer-1 high-side output points $S_{hh,p}^{1}$ and the layer-1 low-side output points $S_{ll,p}^{1}$. The preferred input AC power source is as shown in FIG. 10B with power sources $v_a+$ and $v_a-$. In this case, substantially, there is only one possible connection method for the input source. The layer-1 first input point $S_{D,a}^{1}$ is connected to first terminal $a^+$ to receive power source $v_a+$, the layer-1 second input point $S_{C,a}^{1}$ is connected to second terminal $a^-$ to receive power source $v_a-$, the layer-1 first input point $S_{D,a}^{1}$, is connected to second terminal $a^-$ to receive power source $v_a-$, and the layer-1 second input point $S_{C,a}^{1}$, is connected to first terminal $a^+$ to receive power source $v_a+$. The power source received by the layer-1 first input point $S_{D,a}^{1}$ and the layer-1 second input point $S_{C,a}^{1}$ has a phase difference of 180° to that received by the layer-1 first input point $S_{D,a}^{1}$, and the layer-1 second input point $S_{C,a}^{1}$,.

The output voltage across the first capacitor $C_h$ and the second capacitor $C_l$ is in the range of:

$$V_o^+ = 2\left(3\sqrt{2}V_\phi - 2V_F\right) \pm \delta\%$$

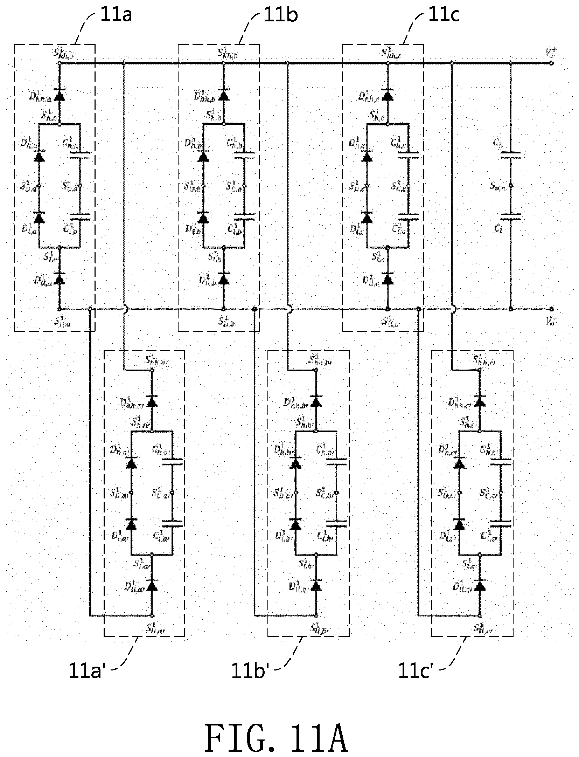

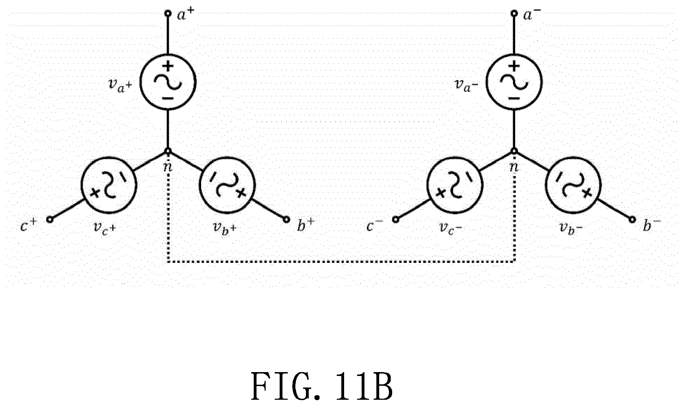

With reference to FIG.11A and FIG.11B, as another example, a balanced N-phase multiplier with N=3 has 6 1-layer multiplier unit 11a, 11a', 11b, 11b', 11c, 11c'connected in parallel between output terminals $Vo^+$ and $Vo^-$, and further includes the first capacitor $C_h$ and the second capacitor $C_l$, connected in series between the layer-1 high-side output points $S_{hh,p}^{1}$ and the layer-1 low-side output points $S_{ll,p}^{1}$. and the preferred input AC power source is a 3-phase power source having power sources $v_a+$, $v_b+$, $v_c+$, $v_a-$, $v_b-$, $v_c-$, first terminals $a^+$, $b^+$, $c^+$, and second terminals $a^-$, $b^-$, $c^-$. power sources $v_a+$, $v_b+$, $v_c+$ have 120° phase difference between each other, and power sources $v_a-$, $v_b-$, $v_c-$ have 180° phase difference to power sources $v_a+$, $v_b+$, $v_c+$.

In this embodiment, there are at least 3 different ways to connect the balanced 3-phase 1-layer multiplier to the 3-phase power source, creating different input phase voltages for each 1-layer multiplier unit.

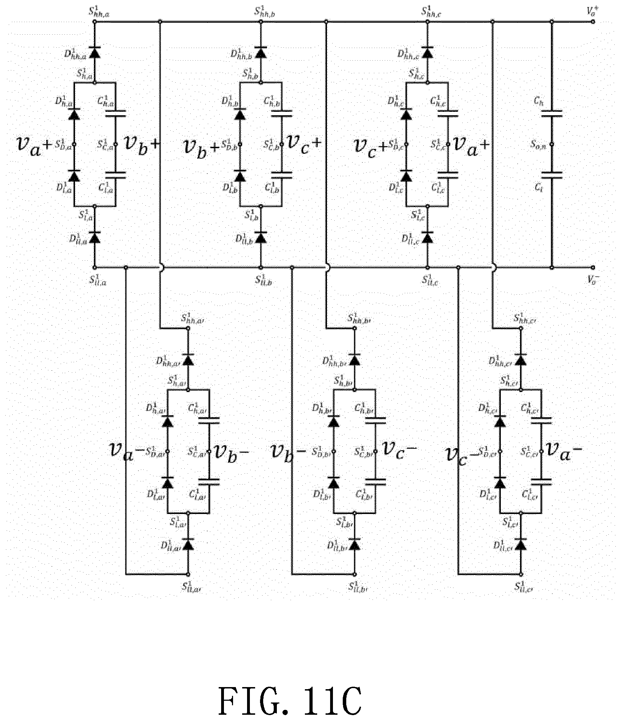

With reference to FIG.11C, in a first way, the layer-1 first input point $S_{D,a}^{1}$ is connected to first terminal $a^+$ to receive power source $v_a+$, the layer-1 second input point $S_{C,a}^{1}$ is connected to first terminal $b^+$ to receive power source

$v_b$+; the layer-1 first input point $S_{D,b}^1$ is connected to first terminal $b^+$ to receive power source $v_b$+, the layer-1 second input point $S_{C,b}^1$ is connected to first terminal $c^+$ to receive power source $v_c$+; the layer-1 first input point $S_{D,c}^1$ is connected to first terminal $c^+$ to receive power source $v_c$+, and the layer-1 second input point $S_{C,c}^1$ is connected to first terminal $a^+$ to receive power source $v_a$+. The layer-1 first input points $S_{D,p}^1$, and layer-1 second input points $S_{C,p}^1$, are then connected to the respective second terminals $a^-$, $b^-$, $c^-$ of the same pair. The phase difference between the layer-1 first input points $S_{D,p}^1$ and the layer-1 second input points $S_{C,p}^1$ of each fundamental unit is 120°

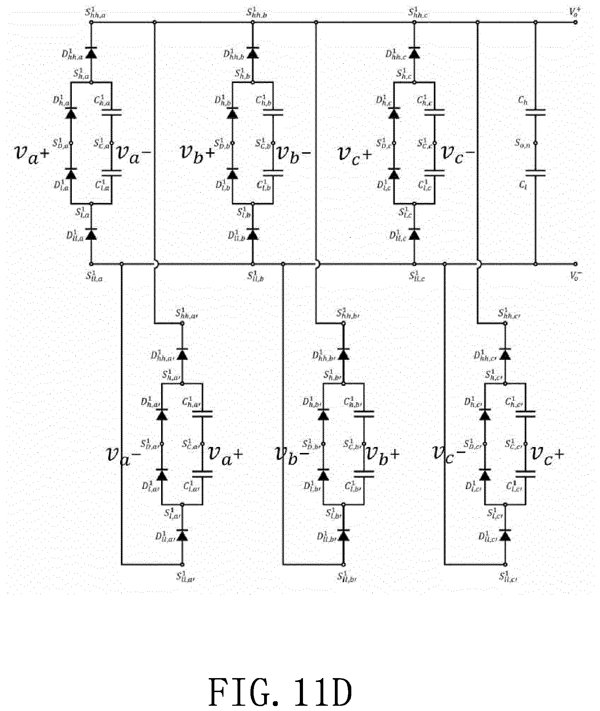

With reference to FIG.11D, in a second way, the layer-1 first input points and $S_{D,p}^1$ the layer-1 second input points $S_{C,p}^1$ are connected such that the phase difference between the layer-1 first input points $S_{D,p}^1$ and $S_{D,p}^1$, and the layer-1 second input points $S_{C,p}^1$ and $S_{C,p}^1$, of each layer-1 multiplier unit is 180° . For example, the layer-1 first input point $S_{D,a}^1$ is connected to first terminal $a^+$ to receive power source $v_a$+, and the layer-1 second input point $S_{C,a}^1$ is connected to second terminal $a^-$ to receive power source $v_a$-. The connection of the other layer-1 multiplier units 11b, 11c, 11a', 11b', and 11c' can be deduced with the description of input connection of the N-phase 1-layer multiplier and is therefore omitted herein but can be observed as labeled in FIG.11D.

In a third way, briefly said, the layer-1 first input points and the layer-1 second input points are connected such that the phase difference between the layer-1 first input points and $S_{D,p}^1$, and the layer-1 second input points $S_{C,p}^1$ and $S_{C,p}^1$, of each layer-1 multiplier unit is 60° For example, the layer-1 first input point $S_{D,a}^1$ is connected to first terminal $a^+$ to receive power source $v_a$+, and the layer-1 second input point $S_{C,a}^1$ is connected to first terminal $c$- to receive power source $v_c$-. The connection of the other layer-1 multiplier units11b, 11c, 11a', 11b', and 11c' can be deduced with the description of the N-phase 1-layer multiplier and is therefore omitted.

For the output voltage of the 3-phase 1-layer balanced multiplier, the output voltage across the first capacitor. $C_h$ and the second capacitor $C_l$ is in the range of:

$$V_o^+ = 2\left[\left(1 + F_{3,l=1}\right)\sqrt{2}V_\phi - 2V_F\right] \pm \delta\%$$

In the above equation, $V_\phi$ is a root mean square phase voltage of the 3-phase AC power source, $F_{3,l=1} * \sqrt{2}V_\phi$ is a line voltage that each layer-1 first input point $S_{D,p}^1$ and the layer-1 second input point $S_{C,p}^1$ of the layer-1 multiplier units receive.

For example, when the phase difference between the layer-1 first input points $S_{D,p}^1$ and the layer-1 second input points $S_{C,p}^1$ of each layer-1 multiplier unit is 120°, the output voltage will become $V_o^+ = 2\left[\left(1 + \sqrt{3}\right)\sqrt{2}V_\phi - 2V_F\right] \pm \delta\%$; when the phase difference between the layer-1 first input points $S_{D,p}^1$ and the layer-1 second input points $S_{C,p}^1$ of each layer-1 multiplier unit is 180°, the output voltage will become $V_o^+ = 2\left[\left(1 + 2\right)\sqrt{2}V_\phi - 2V_F\right] \pm \delta\%$; when the phase difference between the layer-1 first input points $S_{D,p}^1$

and the layer-1 second input points $S_{C,p}^{1}$ of each layer-1 multiplier unit is 60° , the output voltage will become $V_o^+ =$

$$2\left[(1+1)\sqrt{2}V_\phi - 2V_F\right] \pm \delta\% .$$

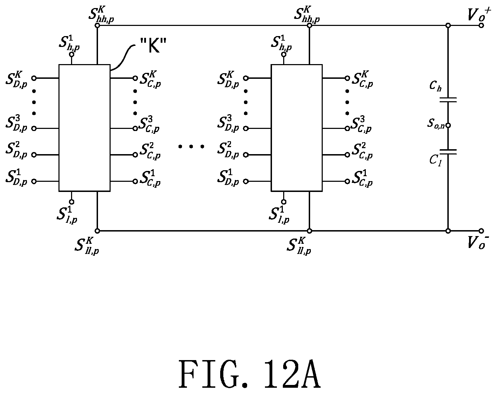

With reference to FIG.12A, in a fourth embodiment of the present invention, the AC/DC voltage multiplier is a multi-phase multi-layer multiplier. In particular, it is an N-phase K-layer multiplier with imbalanced design with input of an N-phase AC power source having N terminals a, b, ..., "n" as shown in FIG.7B. The N-phase K-layer multiplier includes N K-layer multiplier units that are shown in simplified block diagram; wherein "N" is an integer larger than 1. The layer-K high-side output points $S_{hh,p}^{K}$ of the layer-K multiplier units are connected to each other as the output terminal $Vo^+$, and the layer-K low-side output points $S_{ll,p}^{K}$ of the layer-K multiplier units are connected to each other as the output terminal $Vo^-$. In each layer-k multiplier unit for k=1 to k=K-1, the layer-k first input points $S_{D,p}^{k}$ and the layer-k second input points $S_{C,p}^{k}$ are connected to one of the terminals of the N-phase AC power source as depicted in FIG.7B, such that a phase difference between the layer-1 first input point $S_{D,p}^{1}$ and the layer-1 second input point $S_{D,p}^{1}$ , and a phase difference between the layer-k second input points $S_{C,p}^{k}$ and the layer-(k+1) second input points $S_{C,p}^{k}$ are 360° p/N, wherein p=1, 2, ..., N-1.

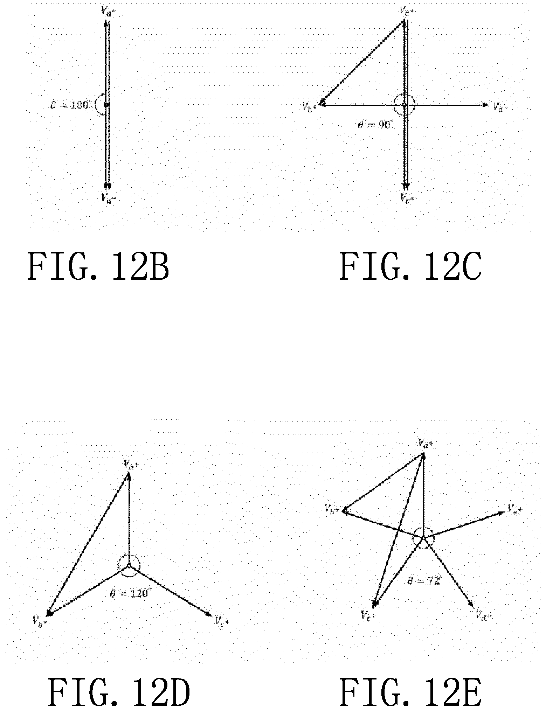

FIG.12B to FIG.12E show the phasor representation of N-phase AC powers for the N-phase K-layer imbalanced multiplier for N=1 to N=5, in which FIG.12B is the single-phase source, FIG.12C is a four-phase source, FIG.12D is a three-phase source, and FIG.12E is a fivephase source. Therefore, the phase difference between the layer-1 first input point $S_{D,p}^{1}$ and the layer-1 second input point $S_{C,p}^{1}$, or between $S_{C,p}^{k}$ and $S_{C,p}^{k+1}$ may be 180° if N = 1, 90° or 180° if N = 2 or N=4, 120° if N=3, 72° or 144° if N=5, and so on.

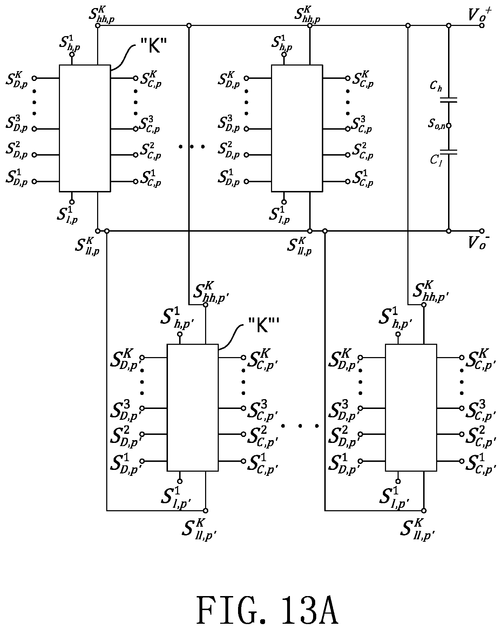

With reference to FIG.13A, in a fifth embodiment of the present invention, the AC/DC voltage multiplier is a multi-phase multi-layer multiplier. In particular, it is an N-phase K-layer multiplier with balanced design with input of an N-phase AC power source having N pairs of first terminal $a^+$, $b^+$, ... $"n"^+$ and second terminal $a^-$, $b^-$, ... $"n"^-$, as depicted in FIG.9B, and the details are therefore omitted herein.

The N-phase K-layer multiplier with balanced design includes a first group of N K-layer multipliers, and a second group of N K-layer multipliers. "N" is an integer larger than 1. In the first group of N K-layer multipliers, the layer-K high-side output points $S_{hh,p}^{K}$ of the layer-K multiplier units 1"K" in the first group are connected to each other, and the layer-K low-side output points $S_{ll,p}^{K}$ of the layer-K multiplier units 1"K"in the first group are connected to each other. In the second group of N K-layer multipliers, the layer-K high-side output points $S_{hh,p}^{K}$ of the layer-K multiplier units 1"K" in the second group are connected to the layer-K high-side output points $S_{hh,p}^{K}$ of the layer-K multiplier units 1"K" in the first group, and the layer-K low-side output points $S_{ll,p}^{K}$ of the layer-K multiplier units 1"K" in the second group are connected to the layer-K low-side output points $S_{ll,p}^{K}$ of the layer-K multiplier units 1"K" in the first group.

In the first group of N K-layer multipliers "K" for k=1 to k=K, the layer-k first input points $S_{D,p}^{k}$ and the layer-k second input points $S_{C,p}^{k}$ are connected to each of the first terminals $a^+$, $b^+$, ... $"n"^+$ and second terminals $a^-$, $b^-$, ... $"n"^-$ of the N-phase AC power source. A phase difference between the layer-1 first input point $S_{D,p}^{1}$ and the layer-1 second input point $S_{D,p}^{1}$ , and a phase difference between the layer-k second input points $S_{C,p}^{k}$ and the layer-(k+1) second input points $S_{C,p}^{k+1}$ for k=1 to k=K-1 are 360° p/N for N is an even number, or 360° p/2N for N is an odd number, wherein p=1, 2, ..., N-1.

In the second group of N K-layer multipliers "K'" for k=1 to k=K, the layer-k first input points $S_{D,p}^{k}$ , and the layer-k second input points $S_{C,p}^{k}$ , are connected to each of the first terminals *a⁺*, *b⁺*, ... *"n"⁺* and second terminals *a⁻*, *b⁻*, ... *"n"⁻* of the N-phase AC power source, such that the layer-k first input points $S_{D,p}^{k}$ , of the second group of N K-layer multipliers "K'" have a phase difference of 180° to that of the layer-k first input points $S_{D,p}^{k}$ of the first group of N K-layer multipliers "K", and the layer-k second input points $S_{C,p}^{k}$ , of the second group of N K-layer multipliers "K'" have a phase difference of 180° to that of the layer-k second input points $S_{C,p}^{k}$ of the first group of N K-layer multipliers "K".

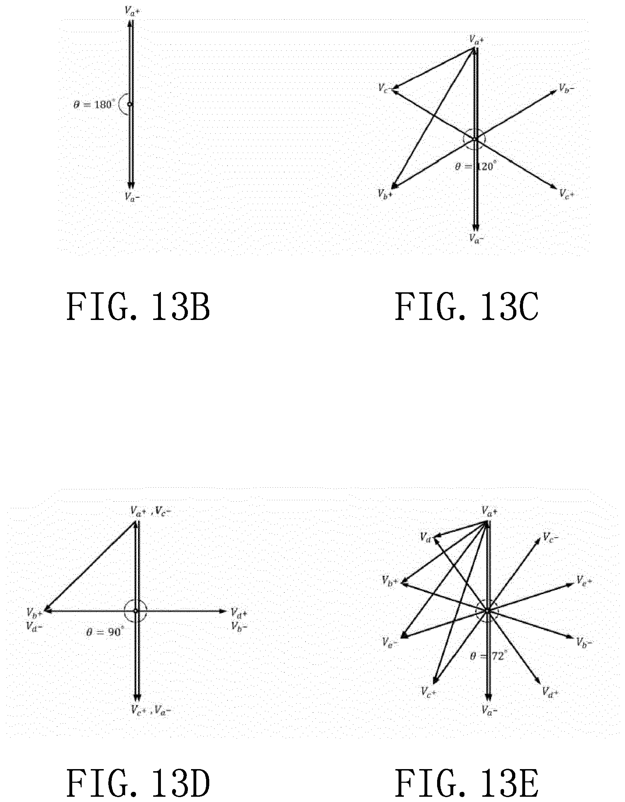

FIG.13B to FIG.13E show the phasor representation of N-phase AC power sources for the N-phase K-layer balanced multiplier for N=1 to N=5, in which FIG.13B is the single-phase source, FIG.13C is a three-phase source, FIG.13D is a four-phase source, and FIG.13E is a fivephase source. Therefore, the phase difference between layer-1 first input points $S_{D,p}^{1}, S_{D,p}^{1}$ , and layer-1 second input points $S_{C,p}^{1}, S_{C,p}^{1}$ , or the phase difference between layer-k second input points $S_{C,p}^{k}, S_{C,p}^{k}$ , and layer-(k+1) second input points $S_{C,p}^{k+1}, S_{C,p}^{k+1}$ may be 180° if N = 1, 90° or 180° if N = 2, and 60° , 120° , or180° if N=3, 90° or 180° if N = 4, 36° , 72° , 108° , 144° , 180 if N=5, and so on.

The output voltage of the N-phase K-layer multipliers can be derived also by KCL and KVL in the same manner as in FIG.5C. When the first capacitor $C_h$ and the second capacitor $C_l$ are connected in series between the layer-K high-side output points $S_{hh,p}^{K}$ and the layer-K low-side output points $S_{ll,p}^{K}$ , the output voltage across the first capacitor $C_h$ and the second capacitor $C_l$ is in the range of:

$$V_o^+ = 2\left[\left(1 + F_{N,k=1} + F_{N,k=2} + \cdots + F_{N,k=K}\right)\sqrt{2}V_\phi - (1+K)V_F\right] \pm \delta\%$$

In the above equation, $V_\phi$ is a root mean square phase voltage of the N-phase AC power source, $F_{N,k=1}\sqrt{2}V_\phi$ is a line voltage that each layer-1 first input point $S_{D,p}^{1}$ and the layer-1 second input point $S_{C,p}^{1}$ of the layer-1 multiplier units 11 receive, $F_{N,k=q}\sqrt{2}V_\phi$ is a line voltage between layer-(q-1) second input point $S_{C,p}^{q-1}$ and the layer-q second input point $S_{C,p}^{q}$ of the layer-K multiplier units 1"K" for q=2, ...K, and $V_F$ is the average forward voltage of the layer-k higher-high-side diode $D_{hh,p}^{k}$ , layer-1 high-side diode $D_{h,p}^{1}$ , the layer-1 low-side diode $D_{l,p}^{1}$ , and layer-k lower-low-side diode $D_{ll,p}^{k}$ for k=1, 2 ...K.

Take an example of an N-phase K-layer multipliers with N=3 and K=1, the available choices for $F_{N,\ell}$ are 1, $\sqrt{3}$ , and 2 , the possible design targets for $V_o^+$ are

$$V_o^+ = \begin{cases} 2\left[(1+2)\sqrt{2}V_\phi - (1+1)V_F\right] \\ 2\left[(1+\sqrt{3})\sqrt{2}V_\phi - (1+1)V_F\right] \\ 2\left[(1+1)\sqrt{2}V_\phi - (1+1)V_F\right] \end{cases}$$

Take another example of an N-phase K-layer multipliers with N=3 and K=2, the possible design targets for $V_o^+$ are

$$V_o^+ = \begin{cases} 2\left[(1+2+2)\sqrt{2}V_\phi - (1+2)V_F\right] \\ 2\left[(1+2+\sqrt{3})\sqrt{2}V_\phi - (1+2)V_F\right] \\ 2\left[(1+2+1)\sqrt{2}V_\phi - (1+2)V_F\right] \\ 2\left[(1+\sqrt{3}+\sqrt{3})\sqrt{2}V_\phi - (1+2)V_F\right] \\ 2\left[(1+\sqrt{3}+1)\sqrt{2}V_\phi - (1+2)V_F\right] \\ 2\left[(1+1+1)\sqrt{2}V_\phi - (1+2)V_F\right] \end{cases}$$

The AC/DC voltage multiplier of the present invention has a fast growth rate of voltage gain with the increasing multiplying stages or layers. According to the experiments conducted by far, the initial stage of layer-1 multiplier unit 11 will give 4 times to 6 times multiplication, and then each additional layer will add 2 times to 4 times multiplication. As a result, a faster ramping of voltage multiplication is achieved, while the output current can still maintain around 75% - 25% of the input current. This feature of evenly distributed current across the AC source and the DC output is highly favorable for high-power and fast-charging applications to meet the market demand nowadays. The output voltage ripple is mainly clamped by the rectifying diode with small turn-on window, and hence the voltage variation is significantly small - typically <0.01% comparing to the voltage output. Finally, its simple topology also allows flexibly forming a single-phase system, a three-phase system, or systems with any arbitrary number of phases as desired.

To sum up, the present invention, when compared to the traditional Cockcroft-Walton voltage multiplier families, has three key features: 1) a higher growth rate of voltage gain with the increasing multiplying stages or layers; 2) more even distribution of current across the AC source and the DC output; and 3) simple topology that allows flexibly forming a single-phase system, a three-phase system, or systems with any arbitrary number of phases as desired. All these three features are highly favorable for high-power and fast-charging applications in electrical power systems such as battery management systems (BMS), grid-tied battery storage, electric vehicle (EV) charging, solar or wind energy to meet the market demand nowadays.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

**Claims**

1. An AC/DC voltage multiplier, **characterized in that** the AC/DC voltage multiplier comprises:

   a layer-1 multiplier unit (11), having a layer-1 high-side point ( $S_{h,p}^1$ ), a layer-1 low-side point ( $S_{l,p}^1$ ), a layer-1 high-side output point ( $S_{hh,p}^1$ ) and a layer-1 low-side output point ( $S_{ll,p}^1$ ), comprising:

   a layer-1 high-side diode ( $D_{h,p}^1$ ) and a layer-1 low-side diode $(D_{l,p}^1)$ connected in series between the layer-1 high-side point ( $S_{h,p}^1$ ) and the layer-1 low-side point ( $S_{l,p}^1$ ), wherein a connection point of the layer-1 high-side diode ( $D_{h,p}^1$ ) and the layer-1 low-side diode ( $D_{l,p}^1$ ) is a layer-1 first input point ( $S_{D,p}^1$ );

a layer-1 high-side capacitor ( $C_{h,p}^1$ ) and a layer-1 low-side capacitor ( $C_{l,p}^1$ ) connected in series between the layer-1 high-side point ( $S_{h,p}^1$ )and the layer-1 low-side point ( $S_{l,p}^1$ ); wherein a connection point of the layer-1 high-side capacitor ( $C_{h,p}^1$ ) and the layer-1 low-side capacitor ( $C_{l,p}^1$ ) is a layer-1 second input point ( $S_{C,p}^1$ );

a layer-1 higher-high-side diode ( $D_{hh,p}^1$ ), connected between the layer-1 high-side point ( $S_{h,p}^1$ ) and the layer-1 high-side output point ( $S_{hh,p}^1$ );

a layer-1 lower-low-side diode ( $D_{ll,p}^1$ ), connected between the layer-1 low-side point ( $S_{l,p}^1$ ) and the layer-1 low-side output point ( $S_{ll,p}^1$ ).

2. The AC/DC voltage multiplier as claimed in claim 1, wherein the layer-1 first input point ( $S_{D,p}^1$ ) and the layer-1 second input point ( $S_{C,p}^1$ ) are connected to a single-phase AC power source having a first terminal and a second terminal, and the single-phase AC power source comprises

a first AC source ( $v_{a+}$ );
a second AC source ( $v_a$- ) connected in series with the first AC source ( $v_{a+}$ ) between the first terminal and the second terminal, and the phase of the second AC source ( $v_a$- ) is shifted 180 ° with respect to the first AC source ( $v_{a+}$ ); wherein
the connection point of the first AC source ( $v_{a+}$ ) and the second AC source ( $v_a$- ) is a neutral connection point ( $n$ ).

3. The AC/DC voltage multiplier as claimed in claim 2, comprising:

a first capacitor ( $C_h$ )and a second capacitor ( $C_l$ ), connected in series between the layer-1 high-side output point ( $S_{hh,p}^1$ ) and the layer-1 low-side output point ( $S_{ll,p}^1$ ); wherein
an output voltage across the first capacitor ( $C_h$ )and the second capacitor ( $C_l$ ) is in the range of:

$$V_o^+ = V_{DC} = 2\left(3\sqrt{2}V_\phi - 2V_F\right) \pm \delta\%;$$

wherein $V_\phi$ is a root mean square phase voltage of the single-phase AC power source, $V_F$ is an average forward voltage of the layer-1 higher-high side diode ( $D_{hh,p}^1$ ), layer-1 high-side diode ( $D_{h,p}^1$ ), the layer-1 low-side diode ( $D_{l,p}^1$ ), and the layer-1 lower-low side diode ( $D_{ll,p}^1$ ), and $\delta\%$ is a tolerance value of 10%.

4. The AC/DC voltage multiplier as claimed in claim 3, wherein
when the values of the first capacitor $C_h$ and the second capacitor $C_l$ are the same, the connection point between the first capacitor ( $C_h$ ) and the second capacitor ( $C_l$ ) is a neutral connection point ( $S_{o,n}$ ), either the layer-1 high-side output point ( $S_{hh,p}^1$ ) or the layer-1 low-side output point ( $S_{ll,p}^1$ ) is a grounding connection point, and an output voltage across the first capacitor ( $C_h$ ) or an output voltage across the second capacitor ( $C_l$ )is $V_{DC}$/2.

5. The AC/DC voltage multiplier as claimed in claim 1, wherein the AC/DC voltage multiplier is a K-layer multiplier ("K"), comprising:
the layer-1 multiplier unit (11) to a layer-K multiplier unit (1"K"), wherein "K" is an integer larger than 1; each layer-k multiplier unit for k=2 to k=K having a layer-k high-side point ( $S_{h,p}^{k}$ ), a layer-k low-side point ( $S_{l,p}^{k}$ ), a layer-k high-side output point ( $S_{hh,p}^{k}$ ) and a layer-k low-side output point ( $S_{ll,p}^{k}$ ), each layer-k multiplier unit comprises:

a layer-k high-side diode ( $D_{h,p}^{k}$ ) and a layer-k low-side diode ( $D_{l,p}^{k}$ ) connected in series between the layer-k high-side point ( $S_{h,p}^{k}$ ) and the layer-k low-side point ( $S_{l,p}^{k}$ ), wherein a connection point of the layer-k high-side diode ( $D_{h,p}^{k}$ ) and the layer-k low-side diode ( $D_{l,p}^{k}$ ) is a layer-k first input point ( $S_{D,p}^{k}$ );

a layer-k high-side capacitor ( $C_{h,p}^{k}$ ) and a layer-k low-side capacitor ( $C_{l,p}^{k}$ ) connected in series between the layer-k high-side point ( $S_{h,p}^{k}$ ) and the layer-k low-side point ( $S_{l,p}^{k}$ ); wherein a connection point of the layer-k high-side capacitor ( $C_{h,p}^{k}$ ) and the layer-k low-side capacitor ( $C_{l,p}^{k}$ ) is a layer-k second input point ( $S_{C,p}^{k}$ );

a layer-k higher-high-side diode ( $D_{hh,p}^{k}$ ), connected between the layer-k high-side point ( $S_{h,p}^{k}$ ) and the layer-k high-side output point ( $S_{hh,p}^{k}$ );

a layer-k lower-low-side diode ( $D_{ll,p}^{k}$ ), connected between the layer-k low-side point ( $S_{l,p}^{k}$ ) and the layer-k low-side output point ( $S_{ll,p}^{k}$ ); wherein

in each layer-k multiplier unit for k=2 to k=K, the layer-k high-side point ( $S_{h,p}^{k}$ ) of the layer-k multiplier unit is connected to the layer-(k-1) high-side output point ( $S_{hh,p}^{k-1}$ ) of the layer-(k-1) multiplier unit, and the layer-k low-side point ( $S_{l,p}^{k}$ ) of the layer-k multiplier unit is connected to the layer-(k-1) low-side output point ( $S_{ll,p}^{k}$ ) of the layer-(k-1) multiplier unit.

6. The AC/DC voltage multiplier as claimed in claim 5, wherein in each layer-k multiplier unit for k=1 to k=K, the layer-k first input point ( $S_{D,p}^{k}$ ) is connected to one of a first terminal and a second terminal of a single-phase AC power source, and the layer-k second input point ( $S_{C,p}^{k}$ ) is connected to the other of the first terminal and the second terminal of the single-phase AC power source.

7. The AC/DC voltage multiplier as claimed in claim 1, wherein the AC/DC voltage multiplier is an imbalanced N-phase multiplier with an N-phase AC power source, comprising:

   N layer-1 multiplier units (11); wherein "N" is an integer larger than 1;

   the layer-1 high-side output points ( $S_{hh,p}^{1}$ ) of the layer-1 multiplier units (11) are connected to each other, and the layer-1 low-side output points ( $S_{ll,p}^{1}$ ) of the layer-1 multiplier units (11) are connected to each other;

   wherein the layer-1 first input points ( $S_{D,p}^{1}$ ) and the layer-1 second input points $S_{C,p}^{1}$ are connected to an N-phase AC power source, and a phase between the layer-1 first input point and the layer-1 second input point of each layer-1 multiplier unit (11) is different.

8. The AC/DC voltage multiplier as claimed in claim 1, wherein the AC/DC voltage multiplier is a balanced N-phase multiplier with input of an N-phase AC power source, comprising

2*N layer-1 multiplier units (11); wherein "N" is an integer larger than 0;

the layer-1 high-side output points $(S_{hh,p}^1)$ of the layer-1 multiplier units (11) are connected to each other, and the layer-1 low-side output points $(S_{ll,p}^1)$ of the layer-1 multiplier units (11) are connected to each other; wherein the N-phase AC power source has N pairs of first terminal and second terminal, each second terminal is shifted by 180° with respect to the first terminal of the same pair, and the first terminals are shifted by 360° /N between each other;

the layer-1 first input points ( $S_{D,p}^1$ ) and the layer-1 second input points ( $S_{C,p}^1$ ) of N of the layer-1 multiplier units (11) are connected to each of the first terminals and second terminals of the N-phase AC power source, and the layer-1 first input points $S_{D,p}^1$ ) and the layer-1 second input points ( $S_{C,p}^1$ ) of the other N of the layer-1 multiplier units (11) are connected to the respective second terminals and the respective first terminals of the same pair.

9. The AC/DC voltage multiplier as claimed in claim 8, wherein N=1, and further comprising:

a first capacitor ($C_h$) and a second capacitor ($C_l$), connected in series between the layer-1 high-side output points ( $S_{hh,p}^1$ ) and the layer-1 low-side output points ( $S_{ll,p}^1$ ); wherein an output voltage across the first capacitor $C_h$ and the second capacitor $C_l$ is in the range of:

$$V_o^+ = 2\left(3\sqrt{2}V_\phi - 2V_F\right) \pm \delta\%$$

wherein $V_\phi$ is a root mean square phase voltage of the N-phase AC power source, $V_F$ is an average forward voltage of the layer-1 higher-high side diode ( $D_{hh,p}^1$ ), layer-1 high-side diode ( $D_{h,p}^1$ ), the layer-1 low-side diode ( $D_{l,p}^1$ ), and the layer-1 lower-low side diode ( $D_{ll,p}^1$ ), and $\delta\%$ is a tolerance value of 10%.

10. The AC/DC voltage multiplier as claimed in claim 8, wherein N=3, and further comprising:

a first capacitor ($C_h$) and a second capacitor ($C_l$), connected in series between the layer-1 high-side output points ( $S_{hh,p}^1$ ) and the layer-1 low-side output points ( $S_{ll,p}^1$ ); wherein an output voltage across the first filter capacitor ($C_h$) and the second filter capacitor ($C_l$) is in the range of:

$$V_o^+ = 2\left[\left(1 + F_{3,l=1}\right)\sqrt{2}V_\phi - 2V_F\right] \pm \delta\%;$$

wherein $V_\phi$ is a root mean square phase voltage of the 3-phase AC power source, $F_{3,l=1} * \sqrt{2}V_\phi$ is a line voltage that each layer-1 first input point ( $S_{D,p}^1$ ) and the layer-1 second input point ( $S_{C,p}^1$ ) of the layer-1 multiplier units (11) receive, $V_F$ is and average forward voltage of the layer-1 higher-high side diode ( $D_{hh,p}^1$ ), layer-1 high-side diode ( $D_{h,p}^1$ ), the layer-1 low-side diode ( $D_{l,p}^1$ ), and the layer-1 lower-low side diode ( $D_{ll,p}^1$ ), and $\delta\%$ is a tolerance value of 10%.

11. The AC/DC voltage multiplier as claimed in claim 5, wherein the AC/DC voltage multiplier is an imbalanced N-phase K-layer multiplier with input of an N-phase AC power source having N terminals, comprising

N K-layer multipliers ("K"); wherein "N" is an integer larger than 1;

the layer-K high-side output points ( $S_{hh,p}^{K}$ ) of the layer-K multiplier units (1"K") are connected to each other, and the layer-K low-side output points ( $S_{ll,p}^{K}$ ) of the layer-K multiplier units (1"K") are connected to each other; wherein

in each layer-k multiplier unit (1"K") for k=1 to k=K-1, the layer-k first input points ( $S_{D,p}^{k}$ ) and the layer-k second input points ( $S_{C,p}^{k}$ ) are connected to one of the terminals of the N-phase AC power source; a phase difference between the layer-1 first input point ( $S_{D,p}^{1}$ ) and the layer-1 second input point ( $S_{D,p}^{1}$ ), and a phase difference between the layer-k second input points ( $S_{C,p}^{k}$ ) and the layer-(k+1) second input points ( $S_{C,p}^{k+1}$ ) are 360° p/N, wherein p=1, 2, ..., N-1.

12. The AC/DC voltage multiplier as claimed in claim 5, wherein the AC/DC voltage multiplier is a balanced N-phase K-layer multiplier with input of an N-phase AC power source, comprising:

a first group of N K-layer multipliers; wherein "N" is an integer larger than 1, and the layer-K high-side output points ( $S_{hh,p}^{K}$ ) of the layer-K multiplier units (1"K") in the first group are connected to each other, and the layer-K low-side output points ( $S_{ll,p}^{K}$ ) of the layer-K multiplier units (1"K") in the first group are connected to each other; and

a second group of N K-layer multipliers, and the layer-K high-side output points ( $S_{hh,p}^{K}$ ) of the layer-K multiplier units (1"K") in the second group are connected to the layer-K high-side output points ( $S_{hh,p}^{K}$ ) of the layer-K multiplier units (1"K") in the first group, and the layer-K low-side output points ( $S_{ll,p}^{K}$ ) of the layer-K multiplier units (1"K") in the second group are connected to the layer-K low-side output points ( $S_{ll,p}^{K}$ ) of the layer-K multiplier units (1"K") in the first group.

13. The AC/DC voltage multiplier as claimed in claim 12, wherein

the N-phase AC power sources each having N pairs of first terminal and second terminal, each second terminal is shifted by 180° with respect to the first terminal of the same pair, and the first terminals are shifted by 360° /N between each other;

in the first group of N K-layer multipliers for k=1 to k=K, the layer-k first input points ( $S_{D,p}^{k}$ ) and the layer-k second input points ( $S_{C,p}^{k}$ ) are connected to one of the first terminals and the second terminals of the N-phase AC power source; a phase difference between the layer-1 first input point ( $S_{D,p}^{1}$ ) and the layer-1 second input point ( $S_{D,p}^{1}$ ), and a phase difference between the layer-k second input points ( $S_{C,p}^{k}$ ) and the layer-(k+1) second input points ( $S_{C,p}^{k+1}$ ) for k=1 to k=K-1 are 360° p/N for N is an even number, or 360° p/2N for N is an odd number, wherein p=1, 2, ..., N-1; and

in the second group of N K-layer multipliers for k=1 to k=K, the layer-k first input points ( $S_{D,p}^{k}$ ) and the layer-k second input points ( $S_{C,p}^{k}$ ) are connected to one of the first terminals and the second terminals of the N-phase AC power source, and have a phase difference of 180° to that of the layer-k first input points ( $S_{D,p}^{k}$ ) and the layer-k second input points ( $S_{C,p}^{k}$ ) of the first group of N K-layer multipliers.

**14.** The AC/DC voltage multiplier as claimed in any one of claims 11-13, further comprising:

a first capacitor $C_h$ and a second capacitor $C_l$, connected in series between the layer-K high-side output points ( $S_{hh,p}^{K}$ ) and the layer-K low-side output points ( $S_{ll,p}^{K}$ ); wherein
an output voltage across the first capacitor $C_h$ and the second capacitor $C_l$ is in the range of:

$$V_o^+ = 2\left[\left(1 + F_{N,k=1} + F_{N,k=2} + \cdots + F_{N,k=K}\right)\sqrt{2}V_\phi - (1+K)V_F\right] \pm \delta\%;$$

wherein $V_\phi$ is a root mean square phase voltage of the N-phase AC power source, $F_{N,k=1}\sqrt{2}V_\phi$ is a line voltage that each layer-1 first input point ( $S_{D,p}^{1}$ ) and the layer-1 second input point ( $S_{C,p}^{1}$ ) of the layer-1 multiplier units (11) receive, $F_{N,k=q}\sqrt{2}V_\phi$ is a line voltage between layer-(q-1) second input point ( $S_{C,p}^{q-1}$ ) and the layer-q second input point ( $S_{C,p}^{q}$ ) of the layer-K multiplier units (1"K") for q=2,3, ...K, $V_F$ is an average forward voltage of the layer-k higher-high side diode ( $D_{hh,p}^{k}$ ), the layer-1 high-side diode ( $D_{h,p}^{1}$ ) and the layer-1 low-side diode ( $D_{l,p}^{1}$ ), and the layer-k lower-low side diode ( $D_{ll,p}^{k}$ ) for k=1, 2 ...K, and $\delta\%$ is a tolerance value of 10%.

**15.** The AC/DC voltage multiplier as claimed in any one of claims 11-13, further comprising:

at least one snubber circuit unit, connected in parallel with at least one of the layer-k high-side diode ( $D_{h,p}^{k}$ ), the layer-k low-side diode ( $D_{l,p}^{k}$ ), the layer-k higher-high-side diode ( $D_{hh,p}^{k}$ ), and the layer-k lower-low-side diode ( $D_{ll,p}^{k}$ ) for k=1, 2 ...K.

FIG. 1

FIG. 2

FIG. 3A

FIG. 3B

FIG. 4A

FIG. 4B

FIG. 5A

FIG. 5B

FIG. 5C

FIG. 5D

FIG. 5E

FIG. 5F

FIG. 6

FIG. 7A

FIG. 7B

FIG. 8

FIG. 9A

EP 4 336 722 A1

FIG. 9B

30

FIG. 10A

FIG. 10B

FIG. 11A

FIG. 11B

FIG. 11C

FIG. 11D

FIG. 12A

FIG. 12B

FIG. 12C

FIG. 12D

FIG. 12E

FIG. 13A

FIG. 13B

FIG. 13C

FIG. 13D

FIG. 13E

FIG. 14

Europäisches
Patentamt

European
Patent Office

Office européen
des brevets

**EUROPEAN SEARCH REPORT**

Application Number

EP 22 19 4666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H04 347579 A (HITACHI MEDICAL CORP) 2 December 1992 (1992-12-02) | 1 | INV. H02M7/06 |
| Y | * paragraphs [0012], [0029]; figures 1-3,5 * | 2-15 | H02M7/08 H02M7/10 H02M7/04 |
| X | JP 2004 056926 A (SONY CORP) 19 February 2004 (2004-02-19) | 1 | H02M3/07 H02M1/00 |
| Y | * paragraph [0035]; figure 1 * | 2,3 | |
| X | CORTEZ DANIEL FLORES ET AL: "A Family of High-Voltage Gain Single-Phase Hybrid Switched-Capacitor PFC Rectifiers", IEEE TRANSACTIONS ON POWER ELECTRONICS, INSTITUTE OF ELECTRICAL AND ELECTRONICS ENGINEERS, USA, vol. 30, no. 8, 1 August 2015 (2015-08-01) , pages 4189-4198, XP011574687, ISSN: 0885-8993, DOI: 10.1109/TPEL.2014.2360173 [retrieved on 2015-03-05] | 1 | |
| Y | * abstract; figures 1,5 * | 4 | **TECHNICAL FIELDS SEARCHED (IPC)** |
| X | JP H10 271831 A (MATSUSHITA ELECTRIC WORKS LTD) 9 October 1998 (1998-10-09) | 1 | H02M |
| Y | * paragraph [0009]; figures 5-7,11-14 * | 4 | |
| X | JP H08 171618 A (TOKIMEC INC) 2 July 1996 (1996-07-02) | 1 | |
| Y | * paragraph [0021]; figure 3 * | 4 | |
| X | JP H04 137499 A (TOSHIBA LIGHTING & TECHNOLOGY) 12 May 1992 (1992-05-12) * paragraph [0001]; figure 1 * | 1 | |
| X | SU 1 156 221 A1 (BRYAKIN VASILIJ [SU]; VELICHKO VLADIMIR [SU] ET AL.) 15 May 1985 (1985-05-15) * abstract; figure 1 * | 1 | |

-/--

The present search report has been drawn up for all claims

| Place of search | Date of completion of the search | Examiner |
|---|---|---|
| The Hague | 9 February 2023 | Kanelis, Konstantin |

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RAMADASS Y K ET AL: "An Efficient Piezoelectric Energy Harvesting Interface Circuit Using a Bias-Flip Rectifier and Shared Inductor", IEEE JOURNAL OF SOLID-STATE CIRCUITS, IEEE, USA, vol. 44, no. 1, 1 January 2010 (2010-01-01), pages 189-204, XP011286556, ISSN: 0018-9200 * Subsection III. A. "Full-Bridge Rectifiers and Voltage Doublers"; Equation 7 * | 3,7-10 | |
| Y | US 2006/164022 A1 (ZHU FURU [CN]) 27 July 2006 (2006-07-27) * paragraphs [0037], [0040] - [0043]; figure 1 * | 5,6, 11-15 | |
| | | | TECHNICAL FIELDS SEARCHED (IPC) |

The present search report has been drawn up for all claims

| Place of search | Date of completion of the search | Examiner |
|---|---|---|
| The Hague | 9 February 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4666

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | | Publication date |
|---|---|---|---|---|---|
| JP H04347579 | A | 02-12-1992 | NONE | | |
| JP 2004056926 | A | 19-02-2004 | NONE | | |
| JP H10271831 | A | 09-10-1998 | NONE | | |
| JP H08171618 | A | 02-07-1996 | NONE | | |
| JP H04137499 | A | 12-05-1992 | JP | 2722801 B2 | 09-03-1998 |
| | | | JP | H04137499 A | 12-05-1992 |
| SU 1156221 | A1 | 15-05-1985 | NONE | | |
| US 2006164022 | A1 | 27-07-2006 | CN | 1491071 A | 21-04-2004 |
| | | | JP | 4542101 B2 | 08-09-2010 |
| | | | JP | 2006529050 A | 28-12-2006 |
| | | | US | 2006164022 A1 | 27-07-2006 |
| | | | WO | 2004103030 A1 | 25-11-2004 |

EPO FORM P0459

For more details about this annex : see Official Journal of the European Patent Office, No. 12/82